(19) Europäisches Patentamt
European Patent Office
Office européen des brevets

(11) **EP 1 747 481 B1**

(12) **FASCICULE DE BREVET EUROPEEN**

(45) Date de publication et mention
de la délivrance du brevet:
**21.11.2007 Bulletin 2007/47**

(21) Numéro de dépôt: **05773039.2**

(22) Date de dépôt: **18.05.2005**

(51) Int Cl.:
*G01T 1/17* [(2006.01)]     *G01T 1/36* [(2006.01)]

(86) Numéro de dépôt international:
**PCT/FR2005/001244**

(87) Numéro de publication internationale:
**WO 2005/121835 (22.12.2005 Gazette 2005/51)**

(54) **MESURE ET TRAITEMENT D'UN SIGNAL COMPRENANT DES EMPILEMENTS D'IMPULSIONS ELEMENTAIRES**

MESSUNG UND BEHANDLUNG EINES SIGNALS MIT ELEMENTARIMPULSBÜNDELN

MEASUREMENT AND TREATMENT OF A SIGNAL COMPRISING STACKS OF ELEMENTARY PULSES

(84) Etats contractants désignés:
**AT BE BG CH CY CZ DE DK EE ES FI FR GB GR HU IE IS IT LI LT LU MC NL PL PT RO SE SI SK TR**

(30) Priorité: **19.05.2004 FR 0405457**

(43) Date de publication de la demande:
**31.01.2007 Bulletin 2007/05**

(73) Titulaire: **COMMISSARIAT A L'ENERGIE ATOMIQUE**
**75015 Paris (FR)**

(72) Inventeurs:
• **BARAT, Eric**
  **F-91470 Limours En Hurepoix (FR)**
• **BRISSET, Thomas**
  **F-78120 Rambouillet (FR)**
• **DAUTREMER, Thomas**
  **F-75014 Paris (FR)**
• **TRIGANO, Thomas**
  **F-75017 Paris (FR)**

(74) Mandataire: **Texier, Christian et al**
**Cabinet Régimbeau**
**20, rue de Chazelles**
**75847 Paris Cedex 17 (FR)**

(56) Documents cités:
**US-A1- 2004 036 025**

• **POMME S ET AL: "Influence of pileup rejection on nuclear counting, viewed from the time-domain perspective" 1 mai 1999 (1999-05-01), NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, PAGE(S) 564-582 , XP004166527 ISSN: 0168-9002 le document en entier**
• **POMME S: "How pileup rejection affects the precision of loss-free counting" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 432, no. 2-3, 11 août 1999 (1999-08-11), pages 456-470, XP004178487 ISSN: 0168-9002**

## Description

La présente invention concerne d'une façon générale l'analyse de signaux comportant une pluralité d'impulsions principales pouvant être constituées chacune d'un empilement d'impulsions élémentaires inconnues que l'on cherche à identifier.

Plus précisément, la présente invention concerne un procédé de mesure comprenant le traitement d'un signal comportant une succession d'impulsions principales de durée D et d'énergie E espacées temporellement les unes des autres et pouvant être constituées chacune d'un empilement d'impulsions élémentaires de durée Di et dont l'énergie est évaluée par une variable Ei possédant une propriété d'additivité au sens mathématique du terme, lesdites impulsions élémentaires ayant des instants d'apparition Ti qui suivent un processus de Poisson homogène d'intensité λ.

De façon générale, de tels signaux peuvent être représentatifs de flux et plus particulièrement de flux de photons.

On connaît déjà des procédés de ce type, notamment dans le domaine de la spectrométrie gamma.

On rappelle que la spectrométrie gamma a pour but, d'une part, de caractériser des radionucléides contenus dans une source émettrice de photons gamma, et d'autre part, de mesurer l'activité de cette source (elle est définie typiquement par un nombre de désintégrations par seconde ou par une unité connue nommée Becquerel).

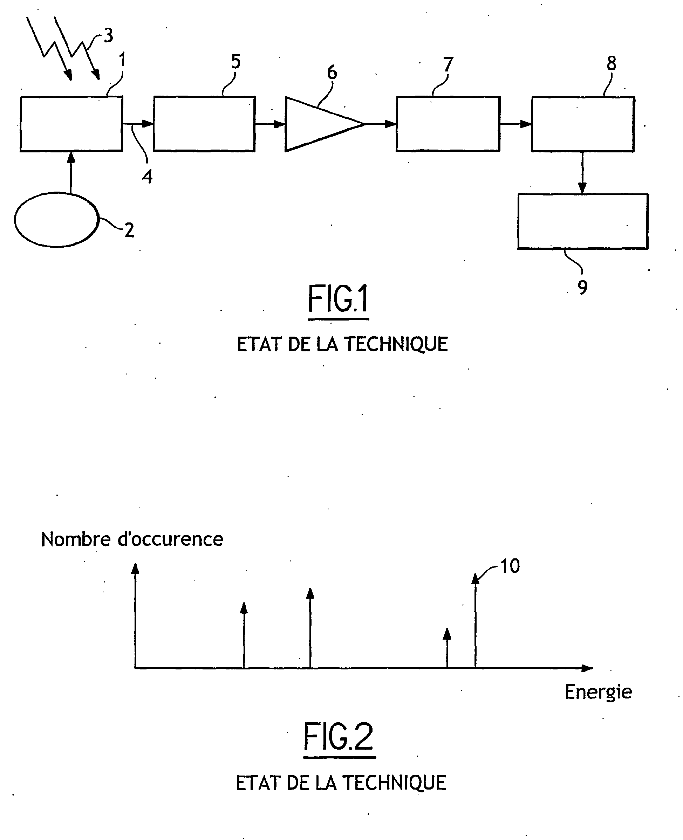

Un exemple de dispositif capable de mettre en oeuvre de tels traitements est illustré sur la figure 1.

Un détecteur 1 pourvu d'une source d'alimentation 2 convertit un signal de photons 3 en signal électrique 4.

Ce signal électrique est ensuite traité par un préamplificateur 5 qui permet d'augmenter le rapport signal sur bruit.

Un amplificateur 6 est ensuite utilisé pour présenter un signal adéquat à au moins une entrée d'un bloc électronique d'acquisition 7.

Un tel bloc est typiquement constitué d'un convertisseur analogique numérique.

En sortie de ce bloc, le signal ainsi numérisé est fourni à un bloc de traitement 8 dans lequel des opérations spécifiques sont mises en oeuvre.

A titre d'exemple, le bloc de traitement 8 peut contenir notamment des circuits aptes à mettre en oeuvre un filtrage numérique de signal.

Finalement, un système de visualisation 9 termine ladite chaîne d'acquisition pour aider un utilisateur dans l'analyse de la composition d'une source émettrice gamma.

La figure 2 illustre typiquement ce qui peut être observé sur un tel système de visualisation.

On peut voir, sur cette figure, différentes raies représentatives chacune d'une valeur quantifiée d'énergie (par exemple la raie 10).

L'ensemble de ces raies caractérise un radionucléide émetteur gamma spécifique (par exemple le césium 137 a une raie monoénergétique à 662 keV ou le cobalt 60 a deux raies monoénergétiques à 1,173 MeV et 1,333 MeV).

Une identification de radionucléide(s), ou plus généralement d'une source émettrice gamma, au moyen de tels dispositifs de spectrométrie peut toutefois poser certaines difficultés.

On connaît notamment trois types de perturbations capables de dégrader un spectre de raies idéales associées à un radionucléide :

- un effet Compton,
- un ajout d'un bruit de mesure à un signal idéal,
- des empilements possibles d'impulsions représentatives chacune d'un photon.

### Effet Compton et bruit de mesure

Lorsqu'un photon entre en interaction avec un détecteur, une impulsion électrique est créée, puis amplifiée comme décrit précédemment sur la figure 1.

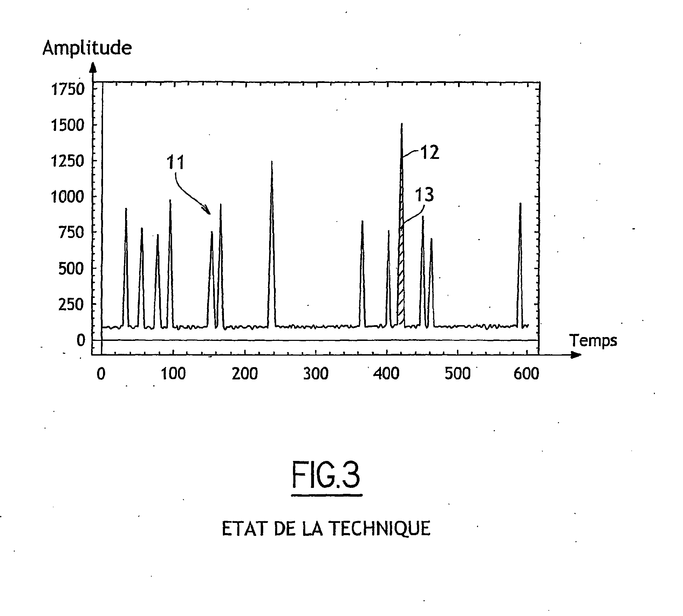

Un exemple de signal temporel 11 généré par un tel détecteur est illustré sur la figure 3.

On peut observer que ce signal se compose d'une succession d'impulsions électriques d'amplitude et de durées différentes, chaque impulsion correspondant, idéalement, à l'interaction d'un unique photon avec le détecteur.

Un tel signal 11 permet une mesure de l'énergie des photons détectés, car la surface d'une impulsion électrique (par exemple la surface 13 de l'impulsion 12) est proportionnelle à l'énergie du photon associé à l'impulsion considérée.

On peut donc, à partir des différentes impulsions électriques 11, déduire l'ensemble des raies énergétiques de la source observée.

Toutefois, deux phénomènes perturbent ce principe de mesure.

Premièrement, du fait d'un effet Compton (cet effet est connu de l'Homme du métier), seule une partie de l'énergie d'un photon est susceptible d'être déposée dans le détecteur.

Et une analyse spectrométrique d'un photon ayant subi un tel effet produit alors une raie d'une énergie inférieure à celle qui devrait être réellement observée.

Deuxièmement, même dans le cas d'un dépôt de la totalité de l'énergie d'un photon, la surface de l'impulsion électrique créée n'est qu'approximativement proportionnelle à ladite énergie du fait du caractère intrinsèquement aléatoire de l'interaction entre ledit photon et le détecteur et du bruit apporté par l'électronique de mesure.

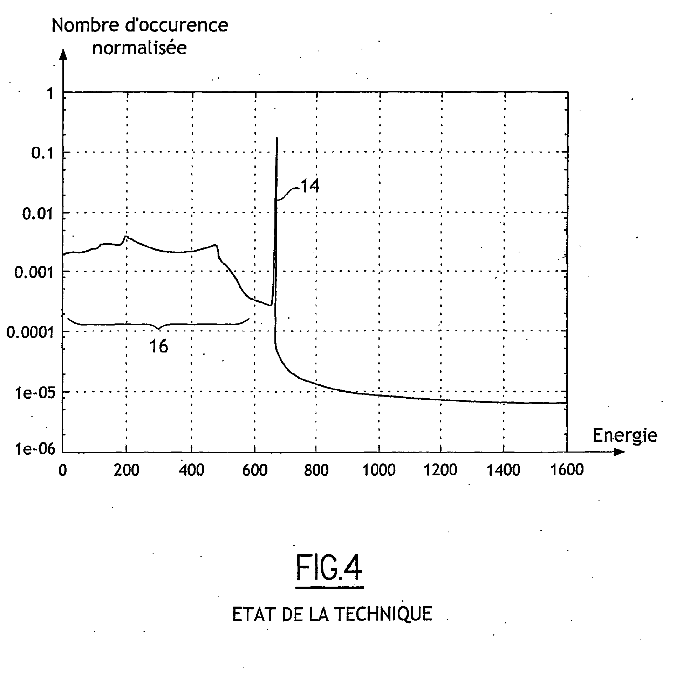

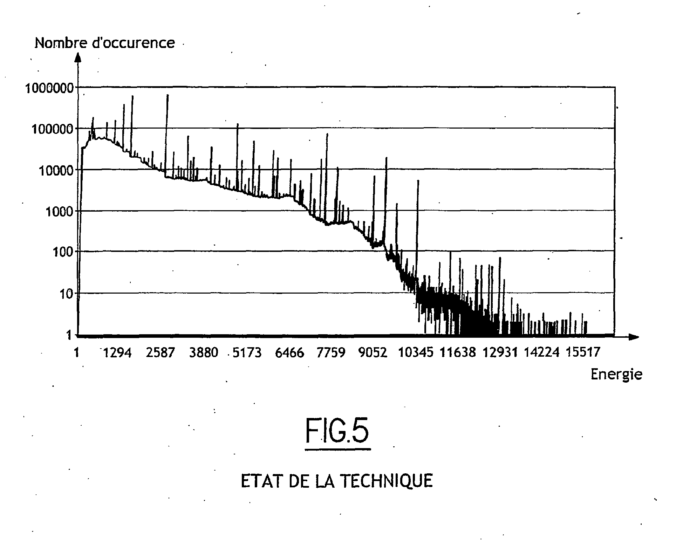

Les figures 4 et 5 illustrent notamment ces deux phénomènes de perturbation.

La figure 4 montre la distribution énergétique du signal provenant d'une source émettant des photons essentiellement à une seule énergie, correspondant au pic 14.

On peut remarquer ici que le signal issu du détecteur ne se présente pas sous la forme idéale d'une seule raie monoénergétique, mais présente également un fonds continu 16 important, d'énergie inférieure à celle du pic 14, et dû à l'effet Compton.

La figure 5 illustre la distribution en énergie du signal provenant de la détection d'une source gamma émettant des photons à plusieurs énergies, comme c'est le cas dans la figure 2.

On peut de nouveau remarquer la présence d'un plafond de bruit dû notamment aux deux phénomènes évoqués : effet Compton et bruit de mesure.

Ce plafond de bruit décroît sensiblement à mesure que les énergies augmentent en abscisse.

Au vu de cette figure, il est clair que l'identification des radionucléides présents dans la source gamma analysée s'avère là aussi difficile, le spectre mesuré ayant une forme très éloignée de celui qui serait obtenu idéalement.

**Empilements d'impulsions**

Une autre source de perturbation d'une analyse par spectrométrie d'une source gamma concerne le problème d'empilements d'impulsions temporelles.

Lorsqu'un unique photon entre en interaction avec un détecteur, l'impulsion générée est d'une durée courte mais non nulle.

Par exemple, dans le cas de détecteurs rapides, cette durée est tout juste inférieure à la microseconde.

Il se peut alors que, lorsque deux photons sont émis à des instants proches, les impulsions respectives générées par des détecteurs lents se superposent partiellement, voire en totalité.

Ce phénomène est notamment connu lorsqu'on utilise un détecteur du type des compteurs de type 2.

Avec ces compteurs, chaque impulsion qui arrive alors qu'une autre est en cours de détection a pour effet de prolonger d'autant l'impulsion qui est en train de se former.

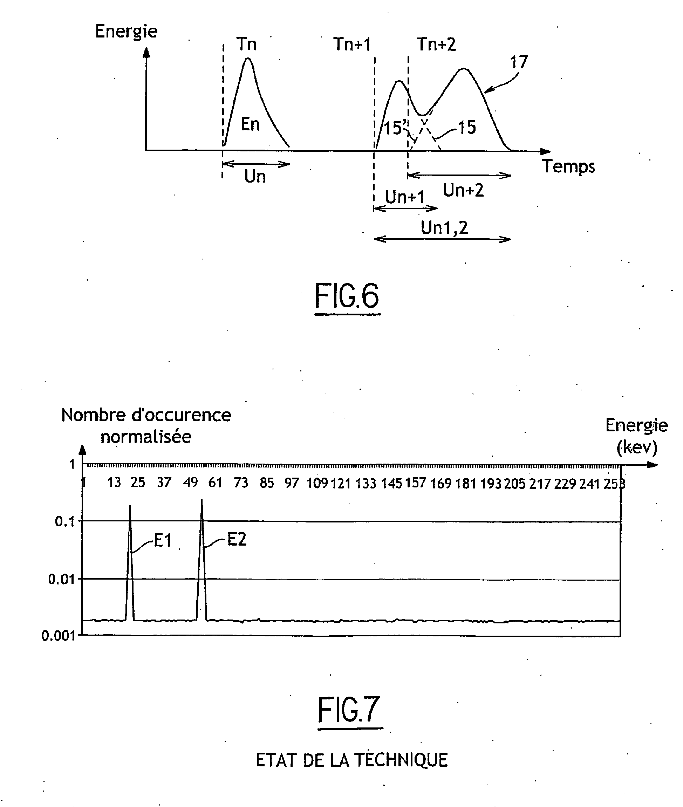

Une illustration de ce phénomène est représentée sur la figure 6.

Elle représente un signal temporel contenant une superposition de deux impulsions 15, 15' arrivées aux instants Tn+1 et Tn+2 et de durée Un+1 et Un+2 respectivement.

L'impulsion 15' apparaît alors même que l'impulsion 15 n'est pas terminée.

On peut voir que le détecteur, qui possède ici une réponse lente relativement aux durées des impulsions, ne distingue pas les deux impulsions l'une de l'autre.

En effet, il fusionne les deux impulsions 15 et 15' pour n'en former qu'une principale 17 de durée Un1,2, ce qui amène à croire qu'un unique photon est entré en interaction avec le détecteur.

Dans un souci de clarté dans la suite du texte, une impulsion élémentaire fera référence à une impulsion liée à un unique photon (par exemple l'impulsion élémentaire 15 ou 15').

Et une impulsion principale correspondra à une impulsion pouvant contenir un empilement d'impulsions élémentaires.

Une première conséquence du phénomène d'empilement est donc le risque de sous-estimer l'activité globale de la source gamma en cours d'analyse.

On notera ici, que ce phénomène est d'autant plus fréquent que l'activité globale de la source est forte ou que la réponse du détecteur est lente.

On considèrëra dans la suite du texte, que la définition des termes « activité globale » et « taux de comptage » est identique.

Une deuxième conséquence d'un tel empilement de photons concerne l'estimation proprement dite des énergies.

En effet, dans le cas d'un tel détecteur, on attribue à un seul photon la somme de l'énergie des photons empilés, car, du fait même de sa définition, l'impulsion principale 17 possède une surface bien supérieure à celle des impulsions élémentaires 15 et 15'.

Ainsi de manière générale, le phénomène d'empilement engendre un déplacement erroné d'une partie du spectre vers les énergies croissantes.

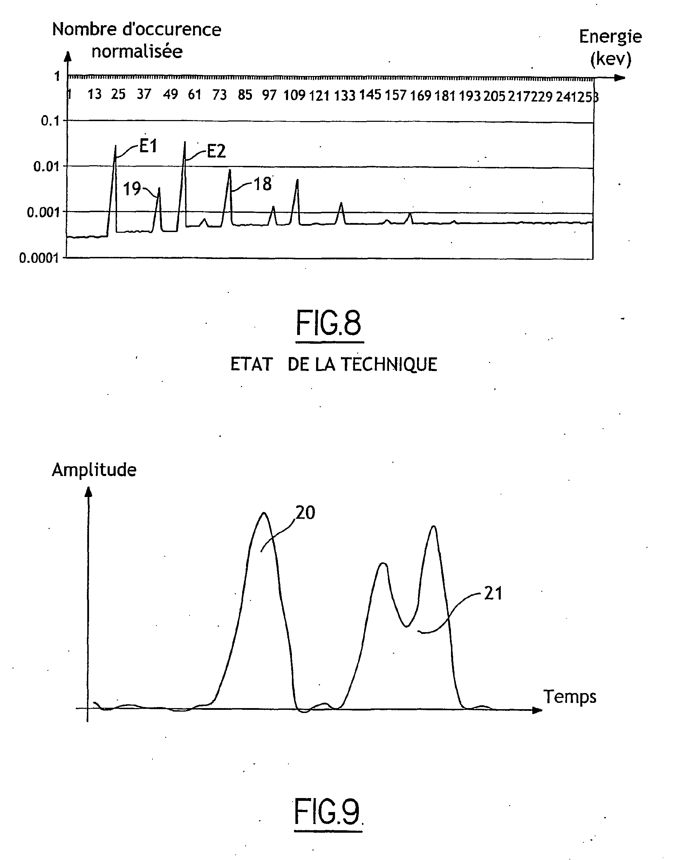

On peut voir, à titre illustratif, un tel déplacement sur les figures 7 et 8 qui représentent respectivement un spectre normalisé contenant deux raies principales à 22keV et 55keV, le phénomène d'empilement n'ayant pas eu lieu, et un spectre normalisé issu d'une même source gamma où le phénomène d'empilement existe.

On notera que la source gamma analysée émet à l'origine des photons à deux énergies E1 et E2 parfaitement identifiées sur la figure 7.

Ce cas correspond à une analyse de spectrométrie avec un faible taux de comptage (un petit détecteur placé loin de la source par exemple).

A l'inverse, lorsque le taux de comptage augmente, le phénomène d'empilement apparaît, et on voit progressivement se créer des raies parasites aux énergies correspondant à des combinaisons linéaires des énergies E1 et E2 (par exemple, 2E1, E1+E2, 2 E2, 2E1+ 2E2, etc. ; par exemple les raies 18 et 19).

En outre, l'apparition de ces raies parasites provoque une distorsion de l'activité apparente aux énergies E1 et E2, du fait de la dispersion du signal vers les hautes énergies.

On comprend aisément que ces raies parasites risquent de perturber le processus d'identification des radionucléides de la source gamma observée, voire de rendre faux les résultats, certaines raies ne correspondant à aucune énergie émise par la source, l'activité des raies réellement émises étant sous-évaluée.

De nombreuses solutions ont été proposées pour limiter l'ensemble des problèmes décrits ci-dessus et particulièrement les problèmes liés aux empilements. Une solution à été proposée dans le document US 2004/036025 A1.

On connaît par exemple une méthode [1] implémentée dans un spectromètre comportant notamment une opération de filtrage linéaire.

Le but du filtrage proposé est d'éliminer le plus possible le bruit ajouté au signal utile, étant entendu que toute impulsion principale formée d'un empilement d'impulsions élémentaires fait partie dudit bruit.

Bien qu'ayant permis certaines améliorations, cette méthode conduit à un compromis qui lui est spécifique et qui limite son champ d'utilisation.

En effet, du fait de la nature du bruit présent dans ledit signal, le filtrage proposé est d'autant plus efficace qu'il opère sur un temps long, ce qui, inévitablement, augmente les risques de prise en compte de phénomènes d'empilement.

En conséquence, cette méthode dépend fortement de l'activité de la source gamma analysée.

Lorsque cette activité est faible, le risque d'empilement étant réduit, un filtrage efficace peut être mis en oeuvre.

En revanche, lorsque cette activité dépasse un certain seuil, ledit temps, sur lequel le filtrage est mis en oeuvre, doit être raccourci pour limiter le nombre d'empilements dans le signal à traiter, ce qui réduit l'efficacité du débruitage et diminue donc la résolution de spectre finalement obtenue.

En conséquence, des spectromètres utilisant une telle méthode souffrent donc d'une dégradation de la résolution lorsque le taux de comptage d'une source gamma augmente.

De nombreux fabricants comme CAMBERRA/EURISYS, ORTEC, ou XIA ont également développé des spectromètres numériques capables de s'affranchir des problèmes d'empilements.

Mais les méthodes de traitement des impulsions restent conceptuellement proches des méthodes classiques qui reposent toujours sur un filtrage linéaire non récursif de type RIF (acronyme de l'expression « Réponse Impulsionnelle Finie »), comme celui proposé plus haut.

Tel est le cas notamment du spectromètre « Digital Gamma Finder » du fabricant XIA.

A cet égard, on trouvera des détails dans les références [2], [3], [4] en ce qui concerne XIA et dans les références [5], [6] en ce qui concerne CAMBERRA/EURISYS.

Il existe aussi d'autres méthodes qui permettent de résoudre en partie le problème d'empilement.

Elles reposent sur une analyse de la forme d'un signal détecté [7], ou sur une comparaison de l'énergie cumulée par rapport à un seuil déterminé [8], [9].

Mais, ces méthodes sont fortement dépendantes du type de détecteur utilisé et demeurent finalement peu robustes lorsque les taux de comptage sont élevés.

On connaît également une autre méthode récente [10] qui permet de corriger des distorsions apportées par des détecteurs spécifiques (notamment un détecteur à base de Tellure de Cadmium) qui ne génèrent pas d'impulsions dont la surface est proportionnelle à l'énergie déposée par un photon. L'énergie déposée par le photon est estimée à partir de deux variables : la surface d'une part, et le temps de montée de l'impulsion associée audit photon d'autre part.

Toutefois, comme toutes les méthodes de spectrométrie présentées ci-dessus, cette méthode repose uniquement sur des résultats expérimentaux.

En outre, ces méthodes se contentent très généralement de supprimer du signal traité les impulsions empilées qu'elles ont détectées.

Le signal final est bien dépourvu d'empilements mais certaines impulsions élémentaires et les informations qu'elles représentent disparaissent avec ladite suppression.

Ainsi, un inconvénient de ces méthodes est qu'elles ne permettent pas d'identifier toutes les impulsions élémentaires contenues dans une impulsion principale pour analyser l'information qu'elle représente.

Un but de la présente invention est donc de s'affranchir de cet inconvénient.

Afin d'atteindre ce but, elle propose une méthode d'identification efficace, notamment dans le domaine de la radioactivité gamma, basée non pas sur une approche expérimentale, mais sur une approche rigoureuse.

Ainsi, la présente invention propose un procédé de mesure comprenant le traitement d'un signal comportant une succession d'impulsions principales de durée D et d'énergie E espacées temporellement les unes des autres et pouvant être constituées chacune d'un empilement d'impulsions élémentaires de durée Di et dont l'énergie est évaluée par une variable Ei possédant une propriété d'additivité lesdites impulsions élémentaires ayant des instants d'apparition Ti qui suivent un processus de Poisson homogène d'intensité λ, caractérisé en ce qu'il comporte les étapes consistant à :

- numériser ledit signal afin de disposer de données représentatives de celui-ci,
  à partir de ces données :

- mesurer la durée D et l'énergie E de chaque impulsion principale afin de construire des couples Durée-Energie (D,E),
- déterminer les couples d'énergie (Di,Ei) des impulsions élémentaires à partir des couples (D,E) construits,
- déduire des couples (Di,Ei) déterminés, l'énergie Ei de chaque impulsion élémentaire.

Certains aspects préférés mais non limitatifs de ce procédé sont les suivants :

- l'étape de détermination des couples Durée-Energie (Di,Ei) est mise en oeuvre en résolvant une formule de désempilement reliant une fonction des couples Durée-Energie (D,E) des impulsions principales à une fonction des couples Durée-Energie (Di,Ei) des impulsions élémentaires,
- ladite formule relie une loi de probabilité discrète des couples Durée-Energie (D,E) des impulsions principales à une loi de probabilité discrète des couples Durée-Energie (Di,Ei) des impulsions élémentaires,
- dans l'étape de détermination des couples Durée-Energie (Di,Ei), la loi de probabilité discrète des couples Durée-Energie (D,E) est estimée à l'aide des couples Durée-Energie (D,E) construits et d'un nombre d'occurrences associé à chaque dit couple (D,E), lesdites occurrences ayant été préalablement déterminées à partir desdites mesures,
- ladite formule est en outre dépendante de l'intensité λ du processus de Poisson,
- ladite formule est de la forme :

$$\sum_{t=0}^{\infty} z^t \left( \alpha^{\,t-Kt(s)} \right) = \frac{1}{1 - \left( \alpha\, z + (1-\alpha)\, z\, B(z,s) \right)}$$

où les variables z et s représentent des transformées en Z des durées et des énergies, t une durée, B(z,s) la transformée en Z de la densité de probabilité $b_{t,e}$, $b_{t,e}$ représentant la probabilité que la durée d'une impulsion principale soit égale à une valeur t et que son énergie soit égale à une valeur e, Kt(s) la transformée en Z d'une fonction dépendante de la densité de probabilité $h_{t,e}$, $h_{t,e}$ représentant la probabilité que la durée d'une impulsion élémentaire soit égale à une valeur t et que son énergie soit égale à une valeur e, et α un paramètre dépendant de l'activité de la source analysée,

- on détermine l'intensité λ du processus de Poisson en mesurant les durées de séparation des impulsions principales,
- on détermine le paramètre α en utilisant la formule suivante :

$$\alpha = \exp(-\lambda T_e)$$

où Te est une période d'échantillonnage associée à l'étape de numérisation,

- l'étape de déduction de l'énergie Ei de chaque impulsion élémentaire comprend une étape de détermination d'une loi de probabilité discrète de ses énergies,
- la loi de probabilité discrète des énergies est une loi de probabilité marginale, suivant les énergies, de la loi de probabilité discrète des couples Durée-Energie (Di,Ei),
- on développe en série entière suivant les durées la fraction à droite de l'égalité dans ladite formule de désempilement pour déterminer les coefficients de cette série,
- les coefficients de ladite série entière sont identifiés aux coefficients $\alpha^{\,t-Kt(s)}$ contenus dans le terme à gauche de l'égalité dans ladite formule de désempilement, pour déterminer ladite densité de probabilité $h_{t,e}$ relative aux couples Durée-Energie (Di,Ei) des impulsions élémentaires,
- ladite détermination des coefficients de la série entière et ladite étape d'identification des coefficients comporte, chacune, au moins un calcul de convolution discrète,
- ladite étape d'identification des coefficients comprend en outre un test de contrainte de positivité,
- les impulsions principales sont représentatives de flux principaux pouvant contenir chacun un empilement de flux élémentaires, chaque flux élémentaire étant représenté par une impulsion élémentaire,
- les flux sont des flux de photons,
- les photons sont des photons gamma,

- une énergie de chaque flux de photons est représentée par l'énergie de l'impulsion correspondante, et en ce que chaque énergie est déterminée à partir de la surface sous chaque impulsion correspondante,
- le procédé comprend une étape initiale de mesure dudit signal comportant une succession d'impulsions principales représentatives de phénomènes physiques,
- le procédé comprend au moins une étape consistant à fournir à un utilisateur une information relative audit signal,
- ladite information concerne les flux élémentaires,
- ladite information concerne l'énergie Ei des impulsions élémentaires représentatives des flux élémentaires.

Un autre but de la présente invention est de proposer un dispositif d'analyse d'un signal comportant une succession d'impulsions principales de durée D et d'énergie E espacées temporellement les unes des autres et pouvant être constituées d'un empilement d'impulsions élémentaires de durée Di et d'énergie Ei, lesdites impulsions élémentaires ayant des instants d'apparition Ti qui suivent un processus de Poisson homogène d'intensité λ, caractérisé en ce que ledit dispositif comporte des moyens aptes à mettre en oeuvre le procédé selon les aspects préférés ci-dessus pris seuls ou en combinaison.

D'autres aspects, buts et avantages dé la présente invention apparaîtront mieux à la lecture de la description détaillée suivante d'une forme de réalisation préférée de celle-ci, donnée à titre d'exemple non limitatif et faite en référence aux dessins annexés, sur lequel :

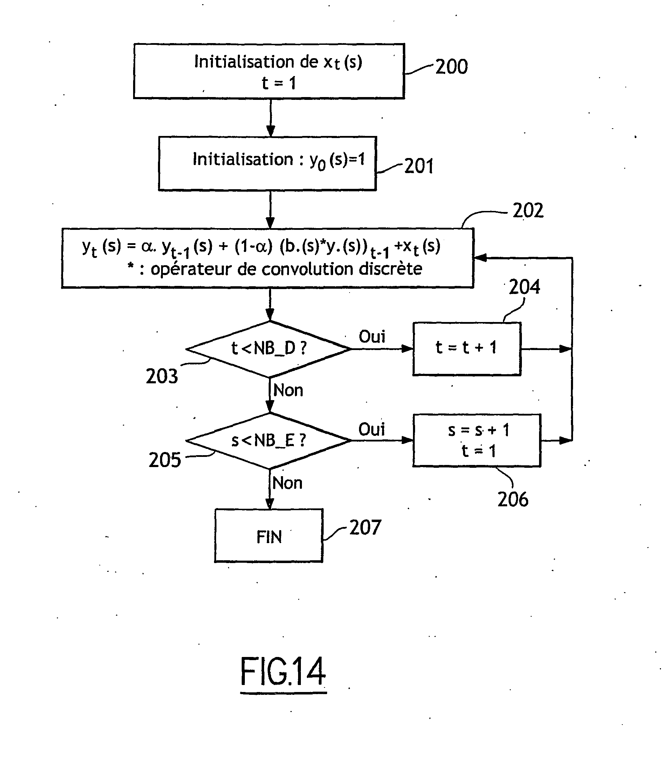

- la figure 1 représente schématiquement les éléments d'une chaîne d'acquisition numérique de spectrométrie gamma,
- la figure 2 illustre un spectre de raie d'une source gamma observable à partir d'un dispositif du type de la figure 1,
- la figure 3 montre, à titre illustratif, un exemple de signal temporel généré par un détecteur de photon gamma,
- la figure 4 montre, à titre illustratif, la distribution énergétique mesurée d'une source monoénergétique de Césium 137,
- la figure 5 montre, à titre illustratif, une distribution énergétique d'une source d'activité émettant des photons à plusieurs énergies,
- la figure 6 illustre schématiquement un signal temporel issu d'un détecteur lent lorsqu'un phénomène d'empilement a lieu,
- la figure 7 illustre un spectre normalisé d'une source gamma lorsque aucun phénomène d'empilement n'a lieu,
- la figure 8 illustre un spectre normalisé de la source gamma analysée sur la figure 7 lorsqu'un phénomène d'empilement a lieu par augmentation de l'activité,

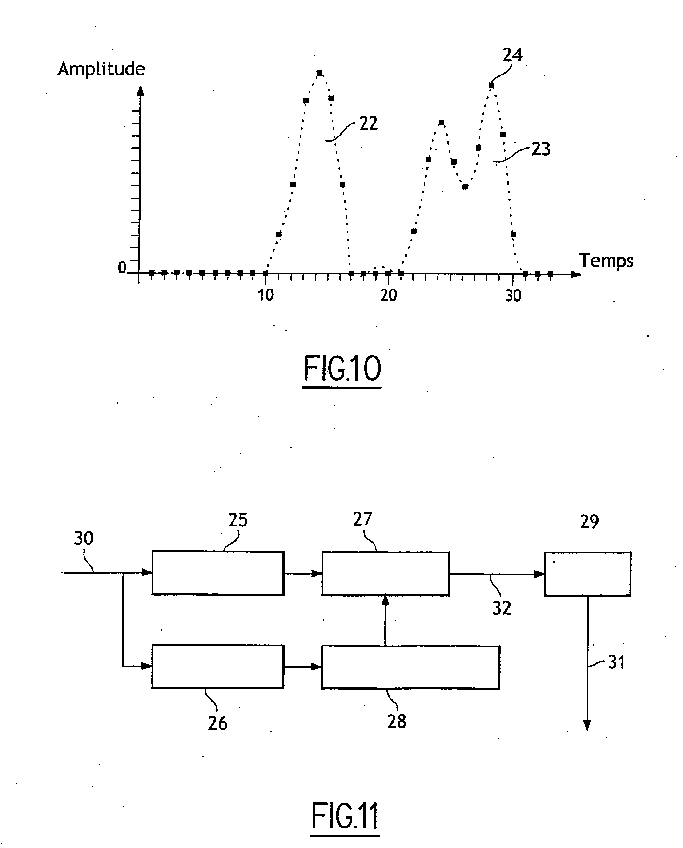

- la figure 9 représente schématiquement une portion de signal mesuré par le système selon l'invention, ce signal comportant deux impulsions principales,
- la figure 10 montre à titre illustratif le signal de la figure 9 lorsqu'il est numérisé par le système selon l'invention,

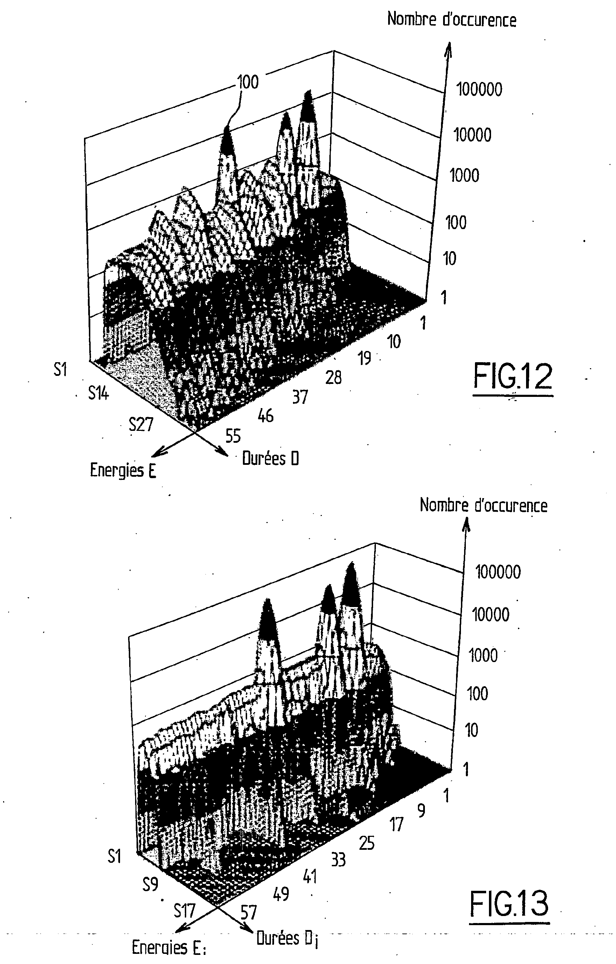

- la figure 11 représente un schéma bloc du procédé selon l'invention,
- la figure 12 montre un exemple d'histogramme bidimensionnel du couple D et E des séquences d'occupation d'un signal traité par le procédé,
- la figure 13 montre un exemple d'histogramme bidimensionnel du couple Di et Ei des impulsions élémentaires dudit signal traité,
- ta figure 14 illustre un schéma bloc d'un algorithme permettant d'implémenter une première partie du procédé de désempilement selon l'invention dans un dispositif électronique approprié,

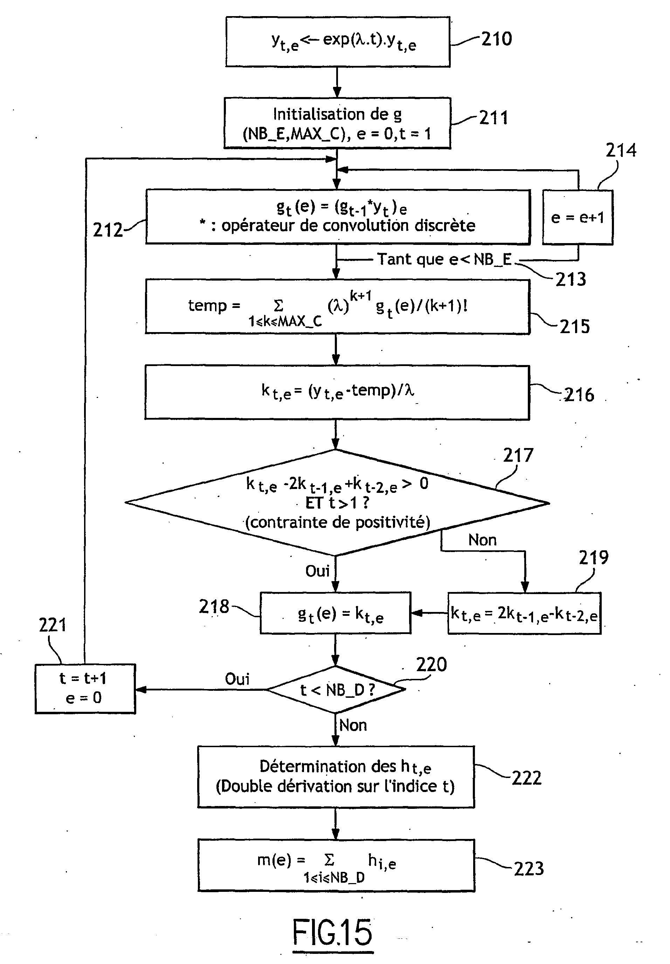

- la figure 15 illustre un schéma bloc d'un algorithme permettant d'implémenter une deuxième partie du procédé de désempilement selon l'invention dans un dispositif électronique approprié,

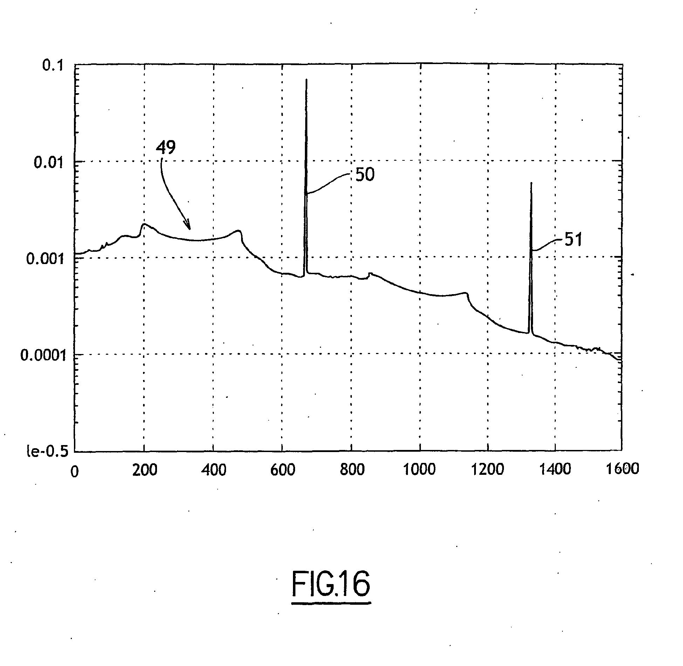

- la figure 16 représente un spectre en énergie gamma observé du Cesium 137, le procédé selon l'invention n'étant pas mis en oeuvre,

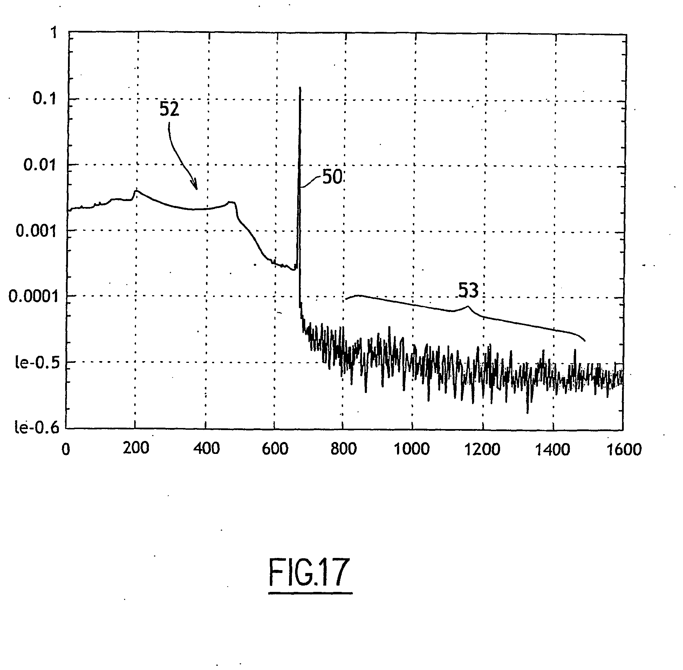

- la figure 17 représente un spectre en énergie gamma observé du Cesium 137, le procédé selon l'invention étant mis en oeuvre.

A titre préliminaire, on désignera dans la suite du texte une séquence d'occupation comme une portion ininterrompue de signal pendant laquelle il y a toujours présence d'au moins une impulsion élémentaire, c'est-à-dire qu'à chaque instant l'amplitude de ce signal est supérieur à un seuil correspondant par exemple au niveau de bruit blanc du détecteur.

En définitive, une séquence d'occupation correspond à une impulsion principale.

Toutefois, cette nouvelle notion permet de désigner, fort utilement par la suite, une séquence de non-occupation comme une portion ininterrompue de signal pendant laquelle ce signal est inférieur voire égal à un seuil choisi (le seuil pouvant être de nouveau le niveau de bruit du détecteur).

A titre d'exemple, la figure 9 représente schématiquement une portion de signal mesuré par le système selon l'invention, ledit signal comportant deux séquences d'occupation 20 et 21.

La séquence d'occupation 20 ne contient pas d'empilement, tandis que la séquence 21 contient un empilement de deux impulsions élémentaires.

Par ailleurs, on attire l'attention du lecteur sur le fait que l'on entend par durée D ou Di d'une impulsion, un temps correspondant à la largeur totale de ladite impulsion.

A cet égard, dans la suite du texte, on désignera dans les formules les durées et les énergies par les notations suivantes :

- durées : t pour une formule temporelle ou z lorsque la formule a été transformée en Z,
- énergies : e pour une formule temporelle ou s lorsque la formule a été transformée en Z.

En référence maintenant à la figure 10, le système selon l'invention échantillonne et numérise l'ensemble d'un signal généré par le détecteur dans une étape de mesure afin de disposer d'un flux de données numériques 24 représentatives de ce signal ou plus généralement du flux de photons gamma associé.

On notera que ledit échantillonnage fait intervenir la période d'échantillonnage Te dont la valeur sera fixée à 1 dans cette description pour simplifier les écritures des formules ainsi que leur compréhension.

Ce flux de données numériques est traité par le bloc de traitement sur la figure 1.

Typiquement on utilise un circuit apte à réaliser des opérations sur des données numériques, tel qu'un processeur, un DSP (acronyme de l'expression anglo-saxonne « Digital Signal Processing »), un FPGA (acronyme de l'expression anglo-saxonne « FliFlop Programmable Gate Array ») ou tout autre circuit équivalent.

Dans ce bloc de traitement, on implémente le procédé selon la présente invention afin de désempiler les impulsions contenues dans le signal mesuré.

On entend ici par « désempiler » tout traitement de l'information contenue dans les impulsions principales afin de résoudre partiellement ou totalement les problèmes apportés par les empilements d'impulsions élémentaires.

Le procédé de désempilement proposé est basé sur les hypothèses suivantes:

- les impulsions élémentaires ont des instants d'apparition qui suivent un processus homogène de Poisson d'intensité λ,
- les variables représentant les énergies ont des propriétés additives.

Un schéma bloc du procédé est représenté sur la figure 11.

On considère tout d'abord les données numériques représentatives des séquences d'occupation.

On estime notamment leur durée D ainsi que leur énergie E et on construit un ensemble 30 de couples Durée-Energie (D,E) associés chacun à une séquence d'occupation particulière.

On notera que l'énergie E d'une séquence d'occupation est évaluée à partir de l'aire présente sous cette séquence.

Cette aire est calculée à partir d'amplitudes des données numérisées et de la résolution temporelle obtenue, cette dernière étant notamment dépendante des performances du bloc d'acquisition sur la figure 1.

Il est évident que la précision d'estimation d'une aire croît avec la résolution temporelle, donc avec un facteur de sur-échantillonnage.

Une première série d'étapes (26 et 28) consiste ensuite à déterminer ladite intensité λ du processus de Poisson (ce paramètre λ sera nécessaire au niveau du bloc 27).

A cet effet, on calcule les durées de séparation entre chaque séquence d'occupation à partir des couples (D, E) des séquences d'occupation (bloc 26) et des instants d'arrivée de ces séquences d'occupation.

Puis, on estime ladite intensité λ à partir des durées qui séparent les séquences d'occupation (bloc 28).

Cette estimation est possible, car la demanderesse a déterminé que ces durées suivent une loi de probabilité exponentielle de paramètre λ.

Ce paramètre peut donc être estimé en caractérisant la loi exponentielle à partir des durées de séparation pouvant être estimées à partir des durées D et des instants d'occurrence des impulsions principales mesurés.

Le bloc 25 consiste à calculer un nombre d'occurrences par couple (D,E) afin d'obtenir une information sur la présence relative des séquences d'occupation.

A titre d'exemple illustratif, on peut notamment obtenir 10 couples (0,4ms,1Mev), 2 couples (0,4ms,1,2Mev) et 40 couples (1ms,1Mev).

Disposant ainsi d'un tableau de données contenant le nombre d'occurrences par couple (D,E), on peut alors obtenir un estimateur de la distribution statistique.

Une représentation possible d'une telle distribution est illustrée sur la figure 12.

On peut voir sur cette figure un histogramme bidimensionnel du couple D et E des séquences d'occupation dans le signal traité.

Il est évident qu'un tel histogramme n'est donné ici qu'à titre illustratif et que cet exemple n'est nullement limitatif.

Sur cette figure, on peut observer distinctement un pic 100 qui correspond à la séquence d'occupation de durée d'indice 14 et d'énergie d'indice 28.

D'après les mesures, cette séquence d'occupation est apparue 10000 fois environ dans le signal issu du détecteur.

Ainsi, d'une certaine manière, le bloc 25 consiste à construire un tableau de données représentatives d'un histogramme bidimensionnel selon les durées et les énergies.

Un autre bloc 27 consiste ensuite à relier les couples (D,E) à des couples Durée-Energie (Di,Ei) d'impulsions élémentaires.

En procédant de la sorte, on dispose pour la première fois d'une information relative aux impulsions élémentaires contenues dans le signal issu du détecteur.

Plus précisément, le passage des impulsions principales aux impulsions élémentaires est mis en oeuvre au moyen d'une formule qui relie une loi dé probabilité discrète des couples (D,E) des impulsions principales à une loi de probabilité discrète du couple (Di,Ei) des impulsions élémentaires.

Une telle formule, que l'on désigne par formule de désempilement, est donnée ci-dessous.

$$\sum_{t=0}^{\infty} z^t \left( \alpha^{t-Kt(s)} \right) = \frac{1}{1 - \left( \alpha z + (1-\alpha) z B(z,s) \right)} \qquad (1)$$

- t représente une durée et les variables z et s représentent des transformées en Z des durées t et des énergies e.
- $B(z,s)$ est la transformée en Z de la densité de probabilité $b_{t,e}$ que la durée d'une impulsion principale soit égale à une valeur représentée par l'indice de durée t et que son énergie soit égale à une valeur représentée par l'indice e (t et e sont des entiers).

Une équation de B(z,s) est de la forme suivante :

$$B(z,s) = \sum_{t \geq 1} \sum_{e \geq 1} b_{t,e} z^t s^e \qquad (2)$$

- $Kt(s)$ est une fonction dépendante de la densité de probabilité $h_{t,e}$ que la durée d'une impulsion élémentaire soit égale à une valeur représentée par l'indice de durée t et que son énergie soit égale à une valeur représentée par l'indice e.

Cette fonction s'exprime sous la forme :

$$Kt(s) = \sum_{e=1}^{\infty} k_{t,e} s^e = \sum_{e=1}^{\infty} \left( s^e \sum_{j=1}^{t-1} \sum_{k=1}^{j} h_{k,e} \right) \qquad (3)$$

Finalement le paramètre $\alpha$ est lié à l'activité de la source analysée et dépend notamment de ladite intensité $\lambda$ du processus de Poisson.

On comprend maintenant l'intérêt d'avoir déterminé ce paramètre $\lambda$ avec les blocs 26 et 28.

En ce qui concerne ledit paramètre $\alpha$, sa détermination en fonction du paramètre $\lambda$ est mise en oeuvre grâce à la formule (4).

$$\alpha = \exp(-\lambda Te) \qquad (4)$$

où Te est une période du signal qui échantillonne le signal issu du détecteur.

Lorsque le bloc 27 est terminé, on dispose d'un tableau de données 32 relatives aux couples (Di,Ei) des impulsions élémentaires contenues dans le signal.

En d'autres termes on est capable à ce niveau de construire un nouvel histogramme bidimensionnel des durées et des énergies desdites impulsions élémentaires.

Un tel histogramme est représenté à titre d'exemple et de manière non limitative sur la figure 13.

En comparaison avec la figure 12, on peut observer que les durées des impulsions ont diminué.

Les impulsions principales contenant des empilements d'impulsions élémentaires ont bien disparu au profit desdites impulsions élémentaires.

Le bloc 29 met en oeuvre un calcul de la loi de probabilité marginale suivant les énergies de la loi de probabilité discrète des couples (Di,Ei).

On détermine ainsi chaque énergie Ei en effectuant, à partir des couples (Di,Ei), une somme sur les durées associées à l'énergie Ei choisie.

A titre d'exemple illustratif, on suppose que le bloc 27 a permis de trouver les couples (Di,Ei) 32 représentés dans le tableau suivant :

| Energie Ei | 1 Mev | 1 Mev | 1 Mev | 1 Mev |
|---|---|---|---|---|
| Durée Di | 0.1ms | 0.2ms | 0.3ms | 0.35ms |
| Probabilité | 0.1 | 0.25 | 0.2 | 0.17 |

La probabilité qu'une impulsion ait, toutes durées confondues, une énergie Ei de 1 Mev dans le signal est de 0,72 (0.1+0.25+0.2+0.17).

Exprimée sous forme d'une équation, ladite détermination de l'occurrence d'une énergie e, notée $G_e$ dans la suite du texte, est la suivante :

$$G_e = \sum_{k=1}^{NB\_D} h_{k,e} \qquad\qquad (5)$$

où k est l'indice des durées et NB_D le nombre de canaux en durée.

Le procédé proposé dans la présente invention nécessite une implémentation des différentes formules ci-dessus dans un dispositif approprié, afin d'obtenir, au final, des données 31 relatives au spectre des énergies Ei des impulsions élémentaires contenues dans le signal.

Comme évoqué précédemment, un tel dispositif peut être un DSP, un FPGA, un ASIC (acronyme de l'expression anglo-saxonne « Application Specific Integrated Circuit ») ou tout autre circuit électronique équivalent.

Un choix judicieux devra être effectué en fonction de contraintes liées à l'application visée, tel que le coût, la taille, la performance, la modularité, etc.

Dans tous les cas, ladite implémentation comporte notamment deux étapes essentielles que l'on va maintenant expliquer.

Bien entendu, l'homme du métier reconnaîtra, à la lecture de la description ci-dessous, qu'il existe d'autres variantes possibles et que la proposition faite ici n'est nullement limitative.

D'après la formule (1), on peut reconnaître que l'expression à gauche de l'égalité est de la forme d'une série entière dont les coefficients correspondent au terme entre parenthèses, c'est-à-dire: $\alpha^{t-Kt(s)}$.

Compte tenu de cette propriété intéressante, une première étape de l'implémentation proposée consiste à développer en série entière le terme à droite de l'égalité et à déterminer l'ensemble des coefficients de cette série.

En d'autres termes, on recherche les coefficients $y_t(s)$ dans la formule suivante :

$$\frac{1}{1-\left(\alpha\ z+(1-\alpha)\ z\ B\ (z,s)\right)} = \sum_{t\geq 0} z^t y_t(s) \qquad\qquad (6)$$

où t est un entier correspondant à une durée.

**Première étape : Recherche des coefficients d'une série entière**

Une telle étape met en oeuvre un algorithme basé sur une relation de récurrence.

Pour ce faire, on considère ledit terme à droite de l'égalité (1) comme une réponse impulsionnelle d'un filtre RII (acronyme de l'expression « Réponse Impulsionnelle Infinie ») dont on déterminé les coefficients $y_t(s)$ selon les

énergies.

La transformée en Z de la fonction de transfert Y/X d'un tel filtre permet d'après ledit terme à droite de l'égalité d'écrire :

$$X(z,s) = Y(z,s)\big(1 - (\alpha\, z + (1-\alpha)z\, B(z,s))\big) \qquad (7)$$

soit,

$$X(z,s) = Y(z,s) - \alpha\, z\, Y(z,s) - (1-\alpha)z\, B(z,s)\, Y(z,s) \qquad (8)$$

En calculant la transformée en Z inverse de la formule (8) selon uniquement les durées z, on obtient :

$$x_t(s) = y_t(s) - \alpha\, y_{t-1}(s) - \big((1-\alpha)b(s) * y(s)\big)_{t-1} \qquad (9)$$

soit,

$$y_t(s) = \alpha\, y_{t-1}(s) + \big((1-\alpha)b(s) * y(s)\big)_{t-1} + x_t(s) \qquad (10)$$

avec

$$b_t(s) := \sum_{e \geq 1} b_{t,e} s^e \qquad (11)$$

On notera ici, que le signe * désigne l'opérateur de convolution.

D'après la formule (10), on peut déterminer récursivement les coefficients $y_t(s)$ pour une énergie s donnée.

A cet effet, étant donné que l'on s'intéresse à la réponse impulsionelle dudit filtre, $x_t(s)$ est un Dirac bidimensionnel, les coefficients $b_t(s)$ dans la formule (11) sont connus à partir des données relatives à l'histogramme des impulsions principales et le paramètre $\alpha$ est connu de la formule (4).

Un schéma bloc d'un algorithme pouvant être implémenté dans un dispositif tel que mentionné plus haut et basé principalement sur la formule (10) est illustré sur la figure 14.

Une première étape 200 consiste à initialiser certaines variables dont $x_t(s)$, qui représente l'entrée du filtre et qui prend les valeurs de la transformée en Z selon les énergies d'un Dirac bidimensionnel.

Par ailleurs, la durée t est initialisée à 1.

Dans l'étape 201, on initialise la sortie $y_t(s)$ du filtre.

Plus précisément, on fixe une première durée (t = 0) et on initialise à 1 toutes les valeurs relatives aux énergies de la variable $y_0(s)$.

A ce stade, on peut commencer à calculer $y_t(s)$ à partir de l'équation (10).

Afin d'atteindre ce but, on met en oeuvre deux boucles imbriquées sur les durées t et sur les énergies s.

La première boucle sur les durées comprend les étapes 202, 203 et 204, et la deuxième boucle sur les énergies comprend les étapes 202 à 206.

A l'étape 202, la formule (10) est déterminée pour une énergie s donnée.

Par exemple, au premier passage dans cette étape 202, c'est $y_1(s=0)$ qui est calculée, puis, après une première itération dans la boucle des durées t, c'est $y_2(0)$ qui est déterminée.

Ainsi, grâce à cette première boucle on calcule l'ensemble des valeurs $y_t(0)$.

L'étape 203 est un test qui permet de déterminer si la boucle sur les durées doit continuer.

Ce test consiste à comparer la variable des durées t à un nombre de canaux en durée maximale prédéfinie (noté NB_D).

Si le test est positif, l'étape 204 est alors mise en oeuvre pour incrémenter la variable des durées t.

Le cas échéant, l'algorithme sort de ladite première boucle, et teste, à l'étape 205, si la deuxième boucle doit continuer.

On compare donc, dans cette étape 205, la variable s à un nombre de canaux en énergie maximale prédéfinie (NB_E).

Si le test est positif, l'algorithme passe à l'étape 206 où l'énergie s est incrémentée et où la variable des durées t est initialisée comme à l'étape 200, à la valeur 1.

Ensuite, l'algorithme se retrouve de nouveau à l'étape 202 et l'ensemble des valeurs $y_t(1)$ va maintenant être déterminé.

A titre d'exemple, le premier coefficient calculé est $y_1(1)$, puis, après la première incrémentation de t, l'étape 202 calcule $y_2(1)$ etc...

L'algorithme se termine finalement à l'étape 207 lorsqu'on sort de la deuxième boucle sur les énergies.

On dispose finalement d'une matrice sur les durées et les énergies dont les éléments sont les coefficients recherchés $y_t(s)$ de la réponse impulsionnelle du filtre RII, ou en d'autres termes les coefficients recherchés de ladite série entière dans la formule (6).

### Deuxième étape : Identification des coefficients

Une deuxième étape consiste maintenant à identifier les coefficients ainsi déterminés avec les coefficients de la série entière à gauche de l'égalité dans la formule de désempilement (1).

D'après (1) et (6) on peut écrire :

$$\sum_{t \geq 0} z^t \left( \alpha^{t - Kt(s)} \right) = \sum_{t \geq 0} z^t y_t(s) \tag{11}$$

donc,

$$\alpha^{t - Kt(s)} = y_t(s) \tag{12}$$

En remplaçant l'activité $\alpha$ par (4), on obtient :

$$y_t(s) = \exp(-\lambda t) \exp(\lambda K_t(s)) \tag{13}$$

On développe maintenant en série entière l'exponentielle contenant le terme $\lambda K_t(s)$ :

$$y_t(s) = \exp(-\lambda t) \sum_{n \geq 0} \frac{(\lambda K_t(s))^n}{n!} \tag{14}$$

puis, afin de rendre possible l'implémentation d'une telle formule dans le dispositif choisi, on effectue une troncature de la série entière :

$$y_t(s) \approx \exp(-\lambda t) \sum_{n=0}^{MAX\_C} \frac{(\lambda K_t(s))^n}{n!} \tag{15}$$

Finalement, en appliquant la transformée en Z inverse selon les énergies au second terme de l'égalité (15), on aboutit à la formule suivante :

$$y_{t,e} = \exp(-\lambda t) \sum_{n=0}^{MAX\_C} \frac{\lambda^n}{n!} \left(k_{t,e}\right)^{(e)*n} \qquad (16)$$

où $k_{t,e}$ est la transformée en Z inverse de $K_t(s)$ selon les énergies s.

On notera ici, que la notation $^{(e)}$*n utilisée dans la formule (16) désigne la convolution n-ième selon les énergies e.

Connaissant $y_{t,e}$, les coefficients $k_{t,e}$ sont déterminés à partir de la formule (16), puis les coefficients $h_{t,e}$ sont déduits de la relation (3) en mettant en oeuvre une double différentiation, et, finalement, on effectue une somme sur les durées selon les énergies des coefficient $h_{t,e}$ pour déterminer chaque énergie Ei des impulsions élémentaires contenues dans le signal.

On propose maintenant un algorithme récursif qui permet d'implémenter cette deuxième étape d'identification dans le dispositif choisi.

Et de nouveau, l'homme du métier reconnaîtra les nombreuses variantes possibles du mode de réalisation proposé ici.

Les étapes principales dudit algorithme sont données à titre illustratif sur la figure 15.

On rappelle ici que ces étapes font intervenir des calculs basés essentiellement sur les formules (16) et (3).

Dans la première étape 210; on détermine l'expression mathématique $y_{t,e} \exp(\lambda t)$ pour commencer à déterminer la somme sur l'indice n dans le terme à droite de l'égalité (16).

Par conséquent cette expression vient de la formule (16) lorsque l'on fait passer l'exponentielle à gauche de l'égalité.

La flèche représentée à l'étape 210 sur la figure 15 désigne une opération d'assignation de valeur à une variable, en l'occurrence $y_{t,e}$ dans le cas présent.

Ensuite, l'étape 211 consiste à initialiser le terme $k_t$*n(s) contenu dans la formule (16).

Les valeurs de ce terme sont stockées dans une variable notée $g_t(e)$ sur la figure 15.

On notera que $g_t(e)$ est la variable qui stocke les convolutions n-ièmes selon les énergies $(k_{t,e})^{(e)*n}$ des coefficients $k_{t,e}$.

D'autres variables telles que l'énergie, la durée, le nombre de canaux maximal en durée NB_D et le nombre de canaux maximal en énergie NB_E sont initialisées.

Suivent ensuite deux boucles imbriquées à partir de l'étape 212.

Une première boucle sur les énergies comprend les étapes 212, 213 et 214.

Elle permet de déterminer les convolutions n-ièmes ou encore $(k_{t,e})^{(e)*n}$ des coefficients $k_{t,e}$ pour une durée t donnée.

La seconde boucle comprend les étapes 212 à 221.

Elle porte sur les durées t et elle permet de calculer les coefficients $k_{t,e}$ selon les durées.

On va maintenant décrire plus précisément chacune de ces deux boucles.

Comme évoqué plus haut, la première boucle sur les énergies commence à l'étape 212.

Dans cette étape, on calcule la convolution de $y_t(e)$ selon les énergies avec $g_{t-1}(e)$ et on stocke cette valeur dans $g_t(e)$.

Un test sur l'indice des énergies est alors effectué à l'étape 213 pour détecter une sortie éventuelle de cette première boucle sur les énergies.

Tant que l'énergie en cours est inférieure à NB_E, on incrémente cette énergie à l'étape 214 et on recommence à l'étape 212.

Une fois que les convolutions n-ièmes $(k_{t,e})^{(e)*n}$ sont déterminées selon les énergies pour la durée t en cours, on passe à l'étape 215 qui calcule puis stocke dans une variable, notée *temp*, une partie de la somme présente à droite de l'égalité dans la formule (16).

Plus précisément la variable temp prend les valeurs suivantes :

$$temp = \sum_{k=1}^{MAX\_C} \lambda^{k+1} g_t(e) \qquad (17)$$

avec t, la durée en cours dans la deuxième boucle et MAX_C indice de troncature du développement en série entière de l'exponentielle.

Cette variable temp est ensuite utilisée à l'étape 216 pour calculer l'ensemble des coefficients $k_{t,e}$ suivant les énergies et pour la durée t en cours.

Le calcul desdits coefficients $k_{t,e}$ est le suivant :

$$k_{t,e} = (y_{t,e} - temp)/\lambda \qquad\qquad (18)$$

Ils sont donc calculés en effectuant la différence entre ladite somme de la formule (16) et ladite partie de la somme de la même formule.

Ceci revient à calculer l'expression suivante :

$$k_{t,e} = \frac{1}{\lambda}\left( \sum_{n=1}^{MAX\_C} \frac{\lambda^n}{n!}(k_{t,e})^{(e)\cdot_n} - \sum_{n=1}^{MAX\_C-1} \frac{\lambda^{n+1}}{(n+1)!}(k_{t,e})^{(e)\cdot_{n+1}} \right) \qquad (19)$$

Une fois les coefficients $k_{t,e}$ suivant les énergies et pour une durée t donnée déterminés, on effectue un test de contrainte de positivité à l'étape 217 afin de garantir que la valeur obtenue est cohérente avec une densité de probabilité.

Le test consiste à déterminer si les inéquations suivantes sont vérifiées ou non :

$$k_{t,e} - 2\,k_{t-1,e} + k_{t-2,e} > 0 \;? \qquad\qquad (20)$$

$$et \qquad t > 1\;?$$

En quelque sorte, on détermine si à la durée précédente t-1 la double dérivée numérique est positive.

Dans lé cas négatif, l'algorithme passe à l'étape 219 qui fixe les coefficients $h_{t,e}$ correspondant à la valeur nulle.

Puis, à l'étape 218, on stocke dans la variable $g_t(e)$ ces coefficients $k_{t,e}$ déterminés.

En revanche, si le test 217 est positif, l'étape 219 est évitée et on passe directement à l'étape 218.

A l'étape 220, le test de la deuxième boucle sur les durées détermine si les calculs selon les durées des coefficients $k_{t,e}$ (ou $g_t(e)$) sont terminés.

Dans la négative, on passe à l'étape 221 où la durée est incrémentée et l'indice des énergies est réinitialisé à la valeur nulle.

On recommence ensuite au début de l'étape 212 avec cette nouvelle durée.

Au contraire, si les calculs sont terminés, on sort de la deuxième boucle sur les durées.

En effet, les coefficients $k_{t,e}$ suivant les énergies et les durées sont maintenant déterminés.

Comme évoqué plus haut, on déduit maintenant les coefficients $h_{t,e}$ à partir de la relation (3).

Cette opération de double dérivation est implémentée à l'étape 222.

A la fin de cette étape, on dispose de l'ensemble des coefficients $h_{t,e}$ représentatifs de la densité de probabilité des couples durée/énergie des impulsions élémentaires contenues dans le signal traité.

Une dernière étape 223 détermine les énergies des impulsions élémentaires et les stocke dans une variable m en fonction des énergies.

Afin d'atteindre un tel but, les coefficients $h_{t,e}$ sont additionnés suivant les durées, et ce pour chaque énergie.

On notera que cette étape correspond au calcul de ladite probabilité marginale suivant les énergies de la densité de probabilité discrète des couples durée/énergie des impulsions élémentaires.

Les énergies des impulsions élémentaires stockées en mémoire sont finalement fournies à un utilisateur à l'aide d'un moyen de visualisation afin que celui-ci identifie les radionucléides présents et établisse un diagnostic (une imprimante, un écran ou tout autre dispositif dont la fonction est équivalente).

L'homme du métier trouvera ici un certain nombre de variantes évidentes.

A titre d'exemple, les informations fournies par le procédé peuvent être relatives à des étapes intermédiaires (représentation graphique des histogrammes des couples Durée-Energie d'impulsions principales ou d'impulsions élémentaires, etc...).

On présente maintenant quelques résultats, non limitatifs, obtenus par mise en oeuvre du procédé selon l'invention à l'aide des algorithmes présentés ci-dessus.

La figure 16 représente un spectre 49 en énergie gamma observé pour le Cesium 137.

Le dispositif de spectrométrie est tel que des empilements se produisent.

En outre ce dispositif n'utilise pas encore le procédé de désempilement selon l'invention.

On peut constater que ce spectre contient une raie fondamentale 50 à une énergie E3, ainsi qu'une seconde raie 51 à une énergie E4 correspondant à un empilement de deux photons d'énergie E3.

La figure 17 montre un spectre 52 de la même source gamma (le Césium 137) lorsque le procédé selon l'invention est utilisé dans ledit dispositif.

La raie 51 d'énergie E4 a disparu ; seule celle correspondant à l'énergie E3 demeure dans le spectre de sorte que ce dernier est rendu conforme à celui du césium 137.

En outre, on peut remarquer sur la figure 17 que le plafond de bruit 53 est fortement réduit par rapport à celui observé sur la figure 16.

A titre d'information ce plafond était notamment dû à une combinaison d'empilements et d'effets Compton.

Les résultats obtenus sont donc très satisfaisants.

Ils révèlent l'efficacité du procédé de mesure selon l'invention ainsi que sa faisabilité industrielle par implémentation des algorithmes proposés dans des dispositifs électroniques appropriés.

Plus généralement, la présente invention offre par ailleurs de nombreux avantages :

- une meilleure identification des énergies émises, et de leur occurrence,
- à la différence des méthodes de filtrage par élimination évoqué dans l'introduction, une prise en compte de tout le signal mesuré, sans éliminer de partie utile de ce signal,
- aucune nécessité d'hypothèse sur la forme des impulsions,
- une bonne fiabilité du procédé indépendamment de l'activité de la source, que celle-ci soit faible ou élevée (cependant une condition nécessaire au bon fonctionnement du procédé est qu'il ne doit pas y avoir d'empilement permanent des impulsions élémentaires),
- possibilité d'appliquer directement le procédé au signal mesuré ou bien de le mettre en oeuvre à posteriori,
- utilisation de très peu d'approximations ce qui rend le procédé plus juste numériquement que les méthodes de l'art antérieur.

Bien entendu, la présente invention ne se limite nullement à la forme de réalisation décrite ci-dessus et représentée sur les dessins.

En particulier, la présente invention peut être mise en oeuvre dans d'autres domaines de spectrométrie (par exemple, la spectrométrie alpha, neutronique, et plus généralement tout pour tout type de corpuscule) et sur différents types de détecteurs, notamment des détecteurs de taille et de forme différentes.

Et plus généralement, elle peut servir aux applications dans lesquelles on recherche une contribution de signaux élémentaires contenus, par empilement, dans un signal principal, chaque signal pouvant être représentatif d'un flux au sens général du terme.

De manière non limitative, il peut s'agir d'un flux de photons, d'éléments fluorescents ou encore d'éléments dans une file d'attente dans un système de communication, etc.

Par exemple dans le cas des files d'attente on peut, par équivalence au mode de réalisation décrit dans la présente invention, associer à la variable des durées D une durée de connexion et à la variable des énergies E une bande passante.

Par ailleurs, il n'est nullement obligatoire qu'une énergie E soit évaluée par l'estimation de la surface sous une impulsion.

Dans le cas du mode de réalisation décrit dans la présente invention, une détermination par la surface convient parfaitement, puisqu'une relation simple relie cette surface à l'énergie d'un photon gamma.

Cependant, tel n'est pas nécessairement le cas dans des applications différentes.

Et l'homme du métier comprendra, ici, qu'un des concepts de la présente invention repose, de manière très générale, sur l'utilisation d'une énergie pour représenter un poids d'une impulsion élémentaire dans une impulsion principale.

La méthode d'estimation de ce poids peut donc s'avérer très différente selon l'application.

A titre d'exemple non limitatif, un poids pourrait correspondre à une amplitude d'une impulsion élémentaire, une durée spécifique, etc.

On rappelle ici, que seules les contraintes suivantes doivent être respectées pour appliquer le procédé selon l'invention :

- les instants d'apparition des impulsions élémentaires suivent un processus de Poisson homogène,
- les impulsions principales ont une durée déterminée D,
- les variables Ei représentant les énergies des impulsions élémentaires ont des propriétés additives.

**REFERENCES BIBLIOGRAPHIQUES**

[1] G.F. Knoll : Radiation Detection and Measurement. Wiley, 2nd ed., 1989,
[2] Brevet Xia : US5.873.054,
[3] Brevet Xia US5.774.522,
[4] Brevet Xia US5.684.850,
[5] Brevet Camberra/Eurisys : US5.337.603,
[6] Brevet Camberra/Eurisys : US5.206.174,
[7] Brevet US 5.884.234,
[8] Brevet US 5.067.090,
[9] Brevet US 5.349.193,
[10] Brevet US 5.821.538.

**Revendications**

1. Procédé de mesure comprenant le traitement d'un signal (11) comportant une succession d'impulsions principales (17) de durée D et d'énergie E espacées temporellement les unes des autres et pouvant être constituées chacune d'un empilement d'impulsions élémentaires (15) de durée Di et dont l'énergie est évaluée par une variable Ei possédant une propriété d'additivité, lesdites impulsions élémentaires (15) ayant des instants d'apparition Ti qui suivent un processus de Poisson homogène d'intensité λ, **caractérisé en ce qu'**il comporte les étapes consistant à :

   - numériser ledit signal afin de disposer de données (24) représentatives de celui-ci,
   à partir de ces données (24) :
   - mesurer la durée D et l'énergie E de chaque impulsion principale (17) afin de construire des couples Durée-Energie (D,E),
   - déterminer les couples d'énergie (Di,Ei) des impulsions élémentaires (15) à partir des couples (D,E) construits,
   - déduire l'énergie Ei de chaque impulsion élémentaire (15) à partir des couples (Di,Ei) déterminés.

2. Procédé selon la revendication 1, **caractérisé en ce que** l'étape de détermination des couples Durée-Energie (Di, Ei) est mise en oeuvre en résolvant une formule de désempilement reliant une fonction des couples Durée-Energie (D,E) des impulsions principales à une fonction des couples Durée-Energie (Di,Ei) des impulsions élémentaires.

3. Procédé selon la revendication 2, **caractérisé en ce que** ladite formule relie une loi de probabilité discrète des couples Durée-Energie (D,E) des impulsions principales à une loi de probabilité discrète des couples Durée-Energie (Di,Ei) des impulsions élémentaires.

4. Procédé selon la revendication 3, **caractérisé en ce que** dans l'étape de détermination des couples Durée-Energie (Di,Ei), la loi de probabilité discrète des couples Durée-Energie (D,E) est estimée à l'aide des couples Durée-Energie (D,E) construits et d'un nombre d'occurrence associé à chaque dit couple (D,E), lesdites occurrences ayant été préalablement déterminée à partir desdites mesures.

5. Procédé selon l'une des revendications 2 à 4, **caractérisé en ce que** ladite formule est en outre dépendante de l'intensité λ du processus de Poisson.

6. Procédé selon l'une des revendications 2 à 5, **caractérisé en ce que** ladite formule de désempilement est de la forme :

$$\sum_{t=0}^{\infty} z^t \left( \alpha^{t-Kt(s)} \right) = \frac{1}{1-\left( \alpha z + (1-\alpha) z\, B(z,s) \right)}$$

où les variables z et s représentent des transformées en Z des durées et des énergies, t une durée, B(z,s) la transformée en Z de la densité de probabilité $b_{t,e}$, $b_{t,e}$ représentant la probabilité que la durée d'une impulsion principale soit égale à une valeur t et que son énergie soit égale à une valeur e, Kt(s) la transformée en Z d'une fonction dépendante de la densité de probabilité $h_{t,e}$, $h_{t,e}$ représentant la probabilité que la durée d'une impulsion élémentaire soit égale à une valeur t et que son énergie soit égale à une valeur e, et $\alpha$ un paramètre dépendant de l'activité de la source analysée.

7. Procédé selon l'une des revendications précédentes, **caractérisé en ce que** l'on détermine l'intensité $\lambda$ du processus de Poisson en mesurant les durées de séparation des impulsions principales (17).

8. Procédé selon l'une des revendications 6 à 7, **caractérisé en ce qu'**on détermine le paramètre $\alpha$ en utilisant la formule suivante :

$$\alpha = \exp(-\lambda T_e)$$

où Te est une période d'échantillonnage associée à l'étape de numérisation.

9. Procédé selon l'une des revendications précédentes, **caractérisé en ce que** l'étape de déduction de l'énergie Ei de chaque impulsion élémentaire (15) comprend une étape de détermination d'une loi de probabilité discrète de ces énergies.

10. Procédé selon la revendication précédente, **caractérisé en ce que** la loi de probabilité discrète des énergies est une loi de probabilité marginale, suivant les énergies, de la loi de probabilité discrète des couples Durée-Energie (Di,Ei).

11. Procédé selon l'une des revendications 6 à 10, **caractérisé en outre en ce qu'**on développe en série entière suivant les durées la fraction à droite de l'égalité dans ladite formule de désempilement pour déterminer les coefficients de cette série.

12. Procédé selon la revendication 11, **caractérisé en ce que** les coefficients de ladite série entière sont identifiés aux coefficients $\alpha^{t-Kt(s)}$ contenus dans le terme à gauche de l'égalité dans ladite formule de désempilement, pour déterminer ladite densité de probabilité $h_{t,e}$ relative aux couples Durée-Energie (Di,Ei) des impulsions élémentaires (15).

13. Procédé selon l'une des revendications 11 à 12, **caractérisé en ce que** ladite détermination des coefficients de la série entière et ladite étape d'identification des coefficients comportent, chacune, au moins un calcul de convolution discrète.

14. Procédé selon l'une des revendications 12 à 13, **caractérisé en ce que** ladite étape d'identification des coefficients comprend en outre un test de contrainte de positivité (217).

15. Procédé selon l'une des revendications précédentes, **caractérisé en ce que** les impulsions principales sont représentatives de flux principaux pouvant contenir chacun un empilement de flux élémentaires, chaque flux élémentaire étant représenté par une impulsion élémentaire.

16. Procédé selon la revendication 15, **caractérisé en ce que** les flux sont des flux de photons (3).

17. Procédé selon la revendication 16, **caractérisé en ce que** les photons (3) sont des photons gamma.

18. Procédé selon l'une des revendications 16 à 17, **caractérisé en ce qu'**une énergie de chaque flux de photons (3) est estimée par l'énergie de l'impulsion correspondante, et **en ce que** l'énergie de chaque impulsion est estimée en fonction de la surface (13) sous chaque impulsion correspondante.

19. Procédé selon l'une des revendications précédentes, **caractérisé en ce qu'**il comprend une étape initiale de mesure dudit signal comportant une succession d'impulsions principales représentatives de phénomènes physiques.

20. Procédé selon l'une des revendications précédentes, **caractérisé en ce qu'**il comprend au moins une étape consistant à fournir à un utilisateur une information relative audit signal.

**21.** Procédé selon la revendication précédente, **caractérisé en ce** ladite information concerne les flux élémentaires.

**22.** Procédé selon la revendication 21, **caractérisé en ce** ladite information concerne l'énergie Ei des impulsions élémentaires représentatives des flux élémentaires.

**23.** Dispositif d'analyse d'un signal (11) comportant une succession d'impulsions principales (17) de durée D et d'énergie E espacées temporellement les unes des autres et pouvant être constituées d'un empilement d'impulsions élémentaires (15) de durée Di et d'énergie Ei, lesdites impulsions élémentaires (15) ayant des instants d'apparition Ti qui suivent un processus de Poisson homogène d'intensité $\lambda$, **caractérisé en ce que** ledit dispositif comporte des moyens aptes à mettre en oeuvre le procédé selon l'une des revendications précédentes.

**Claims**

**1.** Measurement method comprising the processing of a signal (11) containing a succession of main pulses (17) of duration D and energy E, spaced in time from each other and each possibly consisting of a pileup of elementary pulses (15) of duration Di and whose energy is evaluated by a variable Ei having an additive property, said elementary pulses (15) having times of arrival Ti which follow a homogeneous Poisson process of intensity $\lambda$, **characterized in that** it comprises the steps consisting of:

    - digitizing said signal to obtain data (24) representative thereof,

from said data (24):

    - measuring the duration D and energy E of each main pulse (17) to construct Duration-Energy pairs (D,E),
    - determining the energy pairs (Di,Ei) of the elementary pulses (15) from the constructed (D,E) pairs,
    - deducing the energy Ei of each elementary pulse (15) from the determined pairs (Di,Ei).

**2.** Method as in claim 1, **characterized in that** the step to determine Duration-Energy pairs (Di,Ei) is implemented by solving an unpiling formula linking a function of the Duration-Energy pairs (D,E) of the main pulses with a function of the Duration-Energy pairs (Di,Ei) of the elementary pulses.

**3.** Method as in claim 2, **characterized in that** said formula links a discreet probability law of the Duration-Energy pairs (D,E) of the main pulses, with a discrete probability law of the Duration-Energy pairs (Di,Ei) of the elementary pulses.

**4.** Method as in claim 3, **characterized in that** in the step to determine Duration-Energy pairs (Di,Ei), the discreet probability law of the Duration-Energy pairs (D,E) is estimated using constructed Duration-Energy pairs (D,E) and a number of occurrences associated with each said pair (D,E), said occurrences having been determined previously from said measurements.

**5.** Method as in any of claims 2 to 4, **characterized in that** said formula is also dependent on the intensity $\lambda$ of the Poisson process.

**6.** Method as in any of claims 2 to 5, **characterized in that** said unpiling formula is of the form:

$$\sum_{t=0}^{\infty} z^t \left( \alpha^{t-Kt(s)} \right) = \frac{1}{1 - \left( \alpha \, z + \left( 1 - \alpha \right) z \, B\left( z, s \right) \right)}$$

in which the variables z and s represent Z-transforms of durations and energies, t is a duration, B(z,s) is the Z-transform of probability density $b_{t,e}$, $b_{t,e}$ representing the probability that the duration of a main pulse is equal to a value t and its energy is equal to a value e, Kt(s) is the Z-transform of a function dependent upon the probability density $h_{t,e}$ $h_{t,e}$ representing the probability that the duration of an elementary pulse is equal to value t and its energy is equal to a value e, and $\alpha$ is a parameter dependent on the activity of the analysed source.

7. Method as in any of the preceding claims, **characterized in that** the intensity $\lambda$ of the Poisson process is determined by measuring the time intervals separating the main pulses (17).

8. Method as in either of claims 6 to 7, **characterized in that** parameter $\alpha$ is determined using the following formula:

$$\alpha = \exp(-\lambda T_e)$$

in which Te is a sampling period associated with the digitizing step.

9. Method as in any of the preceding claims, **characterized in that** the step to deduce the energy Ei of each elementary pulse (15) comprises a step to determine a discrete probability law of these energies.

10. Method as in the preceding claim, **characterized in that** the discrete probability law of energies is a marginal probability law, according to energy, of the discrete probability law of the Duration-Energy pairs (Di,Ei).

11. Method as in any of claims 6 to 10, also **characterized in that** the fraction on the right of the equation in said unpiling formula is developed in a whole series to determine the coefficients of said series.

12. Method as in claim 11, **characterized in that** the coefficients of said whole series are identified with the coefficients $\alpha^{t-Kt(s)}$ contained in the term on the left of the equation in said unpiling formula to determine said probability density $h_{t,e}$ relating to the Duration-Energy pairs (Di,Ei) of the elementary pulses (15).

13. Method as in either of claims 11 to 12, **characterized in that** said determination of the coefficients of the whole series and said step to identify coefficients each comprise at least one discrete convolution calculation.

14. Method as in either of claims 12 to 13, **characterized in that** said coefficient identification step also comprises a positivity constraint test (217).

15. Method as in any of the preceding claims, **characterized in that** the main pulses are representative of main flows each possibly containing a pileup of elementary flows, each elementary flow being represented by an elementary pulse.

16. Method as in claim 15, **characterized in that** the flows are flows of photons (3).

17. Method as in claim 16, **characterized in that** the photons (3) are gamma photons.

18. Method as in either of claims 16 to 17, **characterized in that** an energy of each flow of photons (3) is estimated by the energy of the corresponding pulse, and **in that** the energy of each pulse is estimated in relation to the area (13) under each corresponding pulse.

19. Method as in any of the preceding claims, **characterized in that** it comprises an initial measurement step of said signal containing a succession of main pulses representative of physical phenomena.

20. Method as in any of the preceding claims, **characterized in that** it comprises at least one step consisting of providing the user with data on said signal.

21. Method as in the preceding claim, **characterized in that** said data relates to elementary flows.

22. Method as in claim 21, **characterized in that** said data concerns the energy Ei of the elementary pulses representative of the elementary flows.

23. Device for analysing a signal (11) containing a succession of main pulses (17) of duration D and energy E spaced in time from each other and possibly consisting of a pileup of elementary pulses (15) of duration Di and energy Ei, said elementary pulses (15) having times of arrival Ti which follow a homogeneous Poisson process of intensity $\lambda$, **characterized in that** said device comprises means able to implement the method as in any of the preceding claims.

**Patentansprüche**

1.  Meßverfahren, daß die Verarbeitung eines Signals (11) umfaßt, das eine Folge von Hauptimpulsen (17) der Dauer D und der Energie E umfaßt, die zeitliche Abstände voneinander haben und von denen jeder aus einer Überlagerung von Elementarimpulsen (15) der Dauer Di bestehen kann und deren Energie durch eine Variable Ei ausgedrückt wird, die eine Additivitätseigenschaft hat, wobei die Elementarimpulse (15) Auftrittszeitpunkte Ti haben, die einem homogenen Poissonprozeß der Intensität λ gehorchen, **dadurch gekennzeichnet, daß** es die folgenden Schritte umfaßt:

    - Digitalisieren des Signals, um Daten (24) verfügbar zu haben, die dieses repräsentieren,
    ausgehend von diesen Daten (24):
    - Messen der Dauer D und der Energie E jedes Hauptimpulses (17) zur Konstruktion von Dauer-Energie-Paarungen (D,E),
    - Bestimmen der Energiepaarungen (Di,Ei) der Elementarimpulse (15) ausgehend von den konstruierten Paarungen (D,E),
    - Ableiten der Energie Ei jedes Elementarimpulses (15) ausgehend von den bestimmten Paarungen (Di,Ei).

2.  Verfahren nach Anspruch 1, **dadurch gekennzeichnet, daß** der Schritt des Bestimmens der Dauer-Energie-Paarungen (Di,Ei) ausgeführt wird, indem eine Zerlegungsformel aufgelöst wird, die eine Funktion der Dauer-Energie-Paarungen (D,E) der Hauptimpulse mit einer Funktion der Dauer-Energie-Paarungen (Di,Ei) der Elementarimpulse verbindet.

3.  Verfahren nach Anspruch 2, **dadurch gekennzeichnet, daß** die Formel eine diskrete Wahrscheinlichkeitsverteilung der Dauer-Energie-Paarungen (D,E) der Hauptimpulse mit einer diskreten Wahrscheinlichkeitsverteilung der Dauer-Energie-Paarungen (Di,Ei) der Elementarimpulse verbindet.

4.  Verfahren nach Anspruch 3, **dadurch gekennzeichnet, daß** in dem Schritt des Bestimmens der Dauer-Energie-Paarungen (Di,Ei) die diskrete Wahrscheinlichkeitsverteilung der Dauer-Energie-Paarungen (D,E) mit Hilfe der konstruierten Dauer-Energie-Paarungen (D,E) und einer Auftrittsanzahl, die jeder der Paarungen (D, E) zugeordnet ist, geschätzt wird, wobei die Fälle des Auftretens ausgehend von den Messungen vorab bestimmt wurden.

5.  Verfahren nach einem der Ansprüche 2 bis 4, **dadurch gekennzeichnet, daß** die Formel außerdem von der Intensität λ des Poissonprozesses abhängt.

6.  Verfahren nach einem der Ansprüche 2 bis 5, **dadurch gekennzeichnet, daß** die Formel zur Zerlegung die folgende Form hat:

$$\sum_{t=0}^{\infty} z^{t}\left(\alpha^{t-Kt(s)}\right) = \frac{1}{1-(\alpha z + (1-\alpha)zB(z,s))}$$

    wobei die Variablen z und s die z-Transformierten der Zeitdauer und der Energie darstellen, t eine Zeitdauer, B(z, s) die z-Transformierte der Wahrscheinlichkeitsdichte $b_{t,e}$, wobei $b_{t,e}$ die Wahrscheinlichkeit darstellt, daß die Dauer eines Hauptimpulses gleich einem Wert t und daß seine Energie gleich einem Wert e ist, Kt(s) die z-Transformierte einer Funktion, die von der Wahrscheinlichkeitsdichte $h_{t,e}$ abhängt, wobei $h_{t,e}$ die Wahrscheinlichkeit darstellt, daß die Dauer eines Elementarimpulses gleich einem Wert t ist und daß seine Energie gleich einem Wert e ist, und α einen Parameter, der von der Aktivität der analysierten Quelle abhängt.

7.  Verfahren nach einem der vorhergehenden Ansprüche, **dadurch gekennzeichnet, daß** die Intensität λ des Poissonprozesses bestimmt wird, indem die zeitlichen Trennabstände der Hauptimpulse (17) gemessen werden.

8.  Verfahren nach einem der Ansprüche 6 bis 7, **dadurch gekennzeichnet, daß** der Parameter α unter Verwendung der folgenden Formel bestimmt wird:

$$\alpha = \exp(-\lambda T_e)$$

wobei $T_e$ ein mit dem Digitalisierungsschritt verbundenes Abtastintervall ist.

9. Verfahren nach einem der vorhergehenden Ansprüche, **dadurch gekennzeichnet, daß** der Schritt der Ableitung der Energie Ei jedes Elementarimpulses (15) einen Schritt zur Bestimmung einer diskreten Wahrscheinlichkeitsverteilung für diese Energien umfaßt.

10. Verfahren nach dem vorhergehenden Anspruch, **dadurch gekennzeichnet, daß** die diskrete Wahrscheinlichkeitsverteilung der Energien eine Randverteilung nach den Energien der diskreten Wahrscheinlichkeitsverteilung der Dauer-Energie-Paarungen (Di,Ei) ist.

11. Verfahren nach einem der Ansprüche 6 bis 10, und außerdem **dadurch gekennzeichnet, daß** in der Zerlegungsformel der Bruch auf der rechten Seite der Gleichung in eine Reihe mit ganzen Potenzen nach den Dauern entwickelt wird, um die Koeffizienten dieser Reihe zu bestimmen.

12. Verfahren nach Anspruch 11, **dadurch gekennzeichnet, daß** die Koeffizienten der Potenzreihe mit den Koeffizi-enten $\alpha^{t-Kt(s)}$ verglichen werden, die im Ausdruck auf der linken Seite der Zerlegungsformel vorkommen, um die auf die Dauer-Energie-Paarungen (Di,Ei) der Elementarimpulse (15) bezogene Wahrscheinlichkeitsdichte $h_{t,e}$ zu bestimmen.

13. Verfahren nach einem der Ansprüche 11 bis 12, **dadurch gekennzeichnet, daß** die Bestimmung der Koeffizienten der Potenzreihe und der Schritt des Koeffizientenvergleichs jeder wenigstens eine diskrete Faltungsberechnung umfassen.

14. Verfahren nach einem der Ansprüche 12 bis 13, **dadurch gekennzeichnet, daß** der Schritt des Koeffizientenvergleichs außerdem einen Test einer Positivitätsrandbedingung (217) umfaßt.

15. Verfahren nach einem der vorhergehenden Ansprüche, **dadurch gekennzeichnet, daß** die Hauptimpulse die Hauptflüsse darstellen, von denen jeder eine Überlagerung von Elementarflüssen enthalten kann, wobei jeder Elementarfluß durch einen Elementarimpuls dargestellt wird.

16. Verfahren nach Anspruch 15, **dadurch gekennzeichnet, daß** die Flüsse Photonenflüsse (3) sind.

17. Verfahren nach Anspruch 16, **dadurch gekennzeichnet, daß** die Photonen (3) Gammaphotonen sind.

18. Verfahren nach einem der Ansprüche 16 bis 17, **dadurch gekennzeichnet, daß** eine Energie jedes Photonenflusses (3) durch die Energie des zugehörigen Impulses geschätzt wird und **dadurch**, daß die Energie jedes Impulses als Funktion der Fläche (13) unter jedem zugehörigen Impuls geschätzt wird.

19. Verfahren nach einem der vorhergehenden Ansprüche, **dadurch gekennzeichnet, daß** es einen anfänglichen Schritt zur Messung des Signals umfaßt, das eine Folge von Hauptimpulsen umfaßt, die physikalische Vorgänge darstellen.

20. Verfahren nach einem der vorhergehenden Ansprüche, **dadurch gekennzeichnet, daß** es wenigstens einen Schritt umfaßt, der darin besteht, für einen Benutzer eine das Signal betreffende Information bereitzustellen.

21. Verfahren nach dem vorhergehenden Anspruch, **dadurch gekennzeichnet, daß** diese Information die Elementarflüsse betrifft.

22. Verfahren nach Anspruch 21, **dadurch gekennzeichnet, daß** die Information die Energie Ei der Elementarimpulse betrifft, die die Elementarflüsse darstellen.

23. Vorrichtung zur Analyse eines Signals (11), das eine Folge von Hauptimpulsen (17) der Dauer D und der Energie E umfaßt, die zeitliche Abstände voneinander haben und die aus einer Überlagerung von Elementarimpulsen (15) der Dauer Di und der Energie Ei bestehen können, wobei die Elementarimpulse (15) Auftrittszeitpunkte Ti haben, die einem homogenen Poissonprozeß der Intensität $\lambda$ gehorchen, **dadurch gekennzeichnet, daß** die Vorrichtung Mittel umfaßt, die dafür geeignet sind, das Verfahren gemäß einem der vorhergehenden Ansprüche auszuführen.

## FIG.1

ETAT DE LA TECHNIQUE

Nombre d'occurence

Energie

## FIG.2

ETAT DE LA TECHNIQUE

FIG.3

ETAT DE LA TECHNIQUE

## FIG.4

ETAT DE LA TECHNIQUE

Nombre d'occurence

Energie

FIG.5

ETAT DE LA TECHNIQUE

**FIG.6**

**FIG.7**

ETAT DE LA TECHNIQUE

Nombre d'occurence
normalisée

Energie
(kev)

1

0.1

0.01

0.001

0.0001

1  13  25  37  49  61  73  85  97  109 121 133 145 157 169 181 193 205 217 229 241 253

E1

E2

19

18

## FIG.8

ETAT  DE LA TECHNIQUE

Amplitude

20

21

Temps

## FIG.9

FIG.10

FIG.11

FIG.12

FIG.13

EP 1 747 481 B1

$$y_t(s) = \alpha \cdot y_{t-1}(s) + (1-\alpha)(b.(s)^*y.(s))_{t-1} + x_t(s)$$
\* : opérateur de convolution discrète

Initialisation de $x_t(s)$
t = 1 — 200

Initialisation : $y_0(s)=1$ — 201

202

203 — t < NB_D ? — Oui → t = t + 1 — 204

Non

205 — s < NB_E ? — Oui → s = s + 1, t = 1 — 206

Non

FIN — 207

## FIG.14

29

$$y_{t,e} \leftarrow \exp(\lambda.t).y_{t,e}$$ — 210

$$\text{Initialisation de g}$$
$$(NB\_E, MAX\_C), e = 0, t = 1$$ — 211

212 — $$g_t(e) = (g_{t-1} * y_t)_e$$
$$* : \text{opérateur de convolution discrète}$$

214

$$e = e+1$$

— Tant que e < NB_E — 213

$$\text{temp} = \sum_{1 \leq k \leq MAX\_C} (\lambda)^{k+1} g_t(e)/(k+1)!$$ — 215

$$k_{t,e} = (y_{t,e} - \text{temp})/\lambda$$ — 216

217

$$k_{t,e} - 2k_{t-1,e} + k_{t-2,e} > 0$$
$$\text{ET } t > 1 ?$$
$$(\text{contrainte de positivité})$$

Non

219

$$k_{t,e} = 2k_{t-1,e} - k_{t-2,e}$$

Oui

218 — $$g_t(e) = k_{t,e}$$

221

$$t = t+1$$
$$e = 0$$

Oui

220

$$t < NB\_D ?$$

Non

$$\text{Détermination des } h_{t,e}$$
$$(\text{Double dérivation sur l'indice t})$$ — 222

$$m(e) = \sum_{1 \leq i \leq NB\_D} h_{i,e}$$ — 223

## FIG.15

<u>FIG.16</u>

FIG.17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004036025 A1
- US 5873054 A
- US 5774522 A
- US 5684850 A
- US 5337603 A
- US 5206174 A
- US 5884234 A
- US 5067090 A
- US 5349193 A
- US 5821538 A

**Littérature non-brevet citée dans la description**

- **G.F. KNOLL.** Radiation Detection and Measurement. Wiley, 1989